# EUROPÄISCHE PATENTANMELDUNG

(11) **EP 4 008 465 A1**
(43) Veröffentlichungstag der Anmeldung: **08.06.2022**
(21) Anmeldenummer: 20211404.7
(22) Anmeldetag: 03.12.2020
(51) Int. Cl.: B23C 5/10

(54) **FRÄSWERKZEUG FÜR DIE BEARBEITUNG VON FASERVERBUNDWERKSTOFFEN**

(71) Anmelder: CERATIZIT Balzheim GmbH & Co. KG, 88481 Balzheim (DE)
(72) Erfinder: WALCHER, Jochen, 88481 Balzheim (DE); RAPP, Oliver, 88481 Balzheim (DE); SCHMID, MICHAEL, 88481 Balzheim (DE); LUIBRAND, Peter, 88481 Balzheim (DE)
(74) Vertreter: Ciesla, Dirk

(57) **Zusammenfassung**

Fräswerkzeug (100) für die Bearbeitung von Faserverbundwerkstoffen umfassend
einen Einspannabschnitt (1) und einen Schneidenabschnitt (2), die sich entlang einer Längsachse (Z) erstrecken,
wobei der Schneidenabschnitt (2) eine zylindrische Grundform aufweist, wobei am Schneidenabschnitt (2) eine Mehrzahl von als Linksspiralen ausgebildeten ersten Spannuten (LS) und eine Mehrzahl von als Rechtsspiralen ausgebildeten zweiten Spannuten (RS) ausgebildet sind, durch welche sich kreuzenden ersten Spannuten (LS) und zweiten Spannuten (RS) am Schneidenabschnitt (2) eine Vielzahl von diskreten Schneidelementen (3) ausgebildet ist,
wobei Schneidelemente (3) eine entlang einer Linksspirale verlaufende erste Umfangsschneide (LR) und eine entlang einer Rechtsspirale verlaufende zweite Umfangsschneide (RR) aufweisen, welche sich jeweils entlang einer gemeinsamen umhüllenden Zylindermantelfläche (ZM) erstrecken, welche Zylindermantelfläche (ZM) einen Außenumfang des Schneidenabschnitts (2) bestimmt, und welche erste Umfangsschneide (LR) und zweite Umfangsschneide (RR) in einer gemeinsamen Spitze (7) münden,
wobei zumindest an einer Teilmenge der Vielzahl von Schneidelementen (3) an die Umfangsschneiden (LR, RR) in Umfangsrichtung jeweils eine, jeweils unter einem primären Freiwinkel (δ₁, γ₁) verlaufende primäre Freifläche (5, 6) anschließt, wobei die primären Freiflächen (5, 6) entlang einer ersten Freiflächenkante (8) aneinandergrenzen.

## Beschreibung

Die vorliegende Erfindung betrifft ein Fräswerkzeug für die Bearbeitung von Faserverbundwerkstoffen mit den Merkmalen des Oberbegriffs von Anspruch 1.

Bei der Bearbeitung von Faserverbundwerkstoffen, wie insbesondere kohlenfaserverstärkten Kunststoffen (CFK), aramidfaserverstärkten Kunststoffen (AFK), glasfaserverstärkten Kunststoffen (GFK) und polyesterfaserverstärkten Kunststoffen, kommen Fräswerkzeuge zum Einsatz, die oftmals einstückig bzw. monolithisch aus einem Schneidwerkstoff, wie insbesondere Hartmetall (engl. *cemented carbide*), Cermet oder einer Schneidkeramik, gebildet sind und gegebenenfalls auch noch mit einer PVD-(physical vapor deposition) oder CVD- (chemical vapor deposition) Hartstoffbeschichtung versehen sind.

Eine wichtige Anforderung bei der Zerspanung von Faserverbundwerkstoffen ist die Vermeidung einer Delamination und von Faserüberstand. Unter Delamination wird eine Trennung von Lagen des Faserverbunds verstanden. Bei einer Bearbeitung eingebrachte Zugspannungen können eine Delamination bewirken. Bei Faserüberstand ragen aus der Schnittkante Faserreste hervor.

Zur Vermeidung einer Delamination sind Ansätze bekannt, am Werkzeug ziehende und drückende Schneiden auszubilden und das Werkzeug bei einer Bearbeitung gegenüber einem Werkstück so zu positionieren, dass das Werkstück komprimiert wird. Dazu ist es erforderlich, dass die Werkstückmitte zwischen den ziehenden und den drückenden Schneiden liegt.
Ein solches, auch als Kompressionsfräser genanntes Werkzeug ist etwa in der JPH06246525 gezeigt.
Die EP3530389 (A1) der Anmelderin zeigt ein Fräswerkzeug mit diskreten Schneidelementen, wobei ein Schneidenbereich mit drückendem Schnitt und ein Schneidenbereich mit ziehendem Schnitt ausgebildet ist. Zwischen den drückend und ziehend wirkenden Schneidenbereichen liegt ein Übergangsbereich.

Nachteilig an bisher bekannten Fräswerkzeug mit einem ziehenden und einem drückenden Schneidenbereich ist es, dass auf eine axiale Positionierung des Werkzeugs bezüglich des Werkstücks geachtet werden muss, um die ziehenden und drückenden Kräfte symmetrisch um eine Werkstückmitte einzuleiten. Ferner muss die Länge des Schneidenbereichs des Werkzeugs auf die Stärke des Werkstücks abgestimmt sein.

Aufgabe der vorliegenden Erfindung ist es, ein verbessertes Fräswerkzeug für die Bearbeitung von Faserverbundwerkstoffen anzugeben.
Das Werkzeug soll insbesondere für verschiedene Fräsoperationen und bezüglich Werkstückdicken universell einsetzbar sein.

Die Aufgabe wird gelöst durch ein Fräswerkzeug mit den Merkmalen von Anspruch 1. Bevorzugte Ausführungsformen sind in den abhängigen Ansprüchen angegeben.

Indem das Fräswerkzeug aufweist:
einen Einspannabschnitt und einen Schneidenabschnitt, die sich entlang einer Längsachse erstrecken,
   wobei der Schneidenabschnitt eine zylindrische Grundform aufweist,
   wobei am Schneidenabschnitt eine Mehrzahl von als Linksspiralen ausgebildeten ersten Spannuten und eine Mehrzahl von als Rechtsspiralen ausgebildeten zweiten Spannuten ausgebildet sind, durch welche sich kreuzenden ersten Spannuten und zweiten Spannuten am Schneidenabschnitt eine Vielzahl von diskreten Schneidelementen ausgebildet ist,
wobei Schneidelemente eine entlang einer Linksspirale verlaufende erste Umfangsschneide und eine entlang einer Rechtsspirale verlaufende zweite Umfangsschneide aufweisen, welche sich jeweils entlang einer gemeinsamen umhüllenden Zylindermantelfläche erstrecken, welche Zylindermantelfläche einen Außenumfang des Schneidenabschnitts bestimmt, und welche erste Umfangsschneide und zweite Umfangsschneide in einer gemeinsamen Spitze münden,
wobei zumindest an einer Teilmenge der Vielzahl von Schneidelementen an die erste Umfangsschneide in Umfangsrichtung eine erste, unter einem ersten primären Freiwinkel verlaufende primäre Freifläche und an die zweite Umfangsschneide in Umfangsrichtung eine zweite, unter einem zweiten primären Freiwinkel verlaufende primäre Freifläche anschließt, wobei die erste primäre Freifläche und die zweite primäre Freifläche entlang einer ersten Freiflächenkante aneinandergrenzen,
kann Delamination und / oder Faserüberstand weitestgehend verhindert werden. Es wird ein Fräswerkzeug mit großer totaler Schneidenlänge und günstigen Schnitteigenschaften realisiert.

In einem rechtsdrehenden Betrieb wirken jene Schneiden, welche an Schneidelementen entlang von linksweisenden Spiralnuten ausgebildet sind und in Richtung Werkzeugspitze weisen, "drückend", üben also eine axiale Kraftkomponente in Werkstückrichtung aus. Eine entlang einer rechtsweisenden Spannut verlaufende Schneide hingegen wirkt mit ziehendem Schnitt, das heißt, dass die betreffende Umfangsschneide auf ein zu bearbeitendes Werkstück eine axiale Kraftkomponente in Richtung des Einspannabschnitts, also in Richtung Schaft des Fräswerkzeugs ausübt.

Da die Schneidelemente sowohl eine ziehende als auch eine drückende Schneide aufweisen, weist das Fräswerkzeug unabhängig von einer axialen Position im Wesentlichen neutrale Schnitteigenschaften auf in dem Sinne, dass entlang des Schneidenbereichs im Wesentlichen an sämtlichen axialen Positionen bezüglich einer axialen Schnittkraftkomponente die gleichen Bedingungen herrschen. Somit ist eine axiale Positionierung des Fräswerkzeugs gegenüber einem Werkstück nicht entscheidend.
Vielmehr wirkt das Werkzeug "neutral", da keine Bereiche mit bevorzugter axialer Krafteinleitung (also vorwiegend drückend oder vorwiegend ziehend wirkend) ausgebildet sind.
Es muss nicht auf die axiale Positionierung des Fräswerkzeugs gegenüber einem Werkstück geachtet werden, wie es bei bisher bekannten Kompressionsfräsern der Fall ist. Das erfindungsgemäße Fräswerkzeug kann dadurch über die gesamte Länge des Schneidenbereichs eingesetzt werden. Auch kann es für verschiedene Materialstärken eingesetzt werden.

Beim erfindungsgemäßen Fräswerkzeug liegen die ziehenden und die drückenden Umfangsschneiden auf einer gemeinsamen Zylindermantelfläche, welche einen Außenumfang des Schneidenabschnitts bestimmt.
Die erste Umfangsschneide und zweite Umfangsschneide münden in einer gemeinsamen Spitze. Hinter der Schneidkante fallen Freiflächen nach innen ab. Das erfindungsgemäße Fräswerkzeug weist eine große totale Schneidenlänge auf. Mit der totalen Schneidenlänge ist die Summe der an einem Umfang des Fräswerkzeugs ausgebildeten Schneiden gemeint. Die in Summe große Schneidenlänge bei hohem Spanraumvolumen erhöht Standzeit bzw. Leistungsfähigkeit des Fräswerkzeugs. Besonders günstig ist es, dass an einem Schneidelement zwei Umfangsschneiden wirken.

Bevorzugt ist vorgesehen, dass die Teilmenge an Schneidelementen wenigstens 80% beträgt, in anderen Worten, dass an wenigstens 80% der Schneidelemente Umfangsschneiden mit daran anschließenden primären Freiflächen ausgebildet sind, dass also wenigstens 80% der Schneidelemente gemäß Anspruch 1 ausgestaltet sind. Weiter bevorzugt sind mehr als 90% der Schneidelemente, besonders bevorzugt sämtliche Schneidelemente derart ausgebildet.
In der Regel sind allein aus Gründen der Herstellung sämtliche Schneidelemente mit Umfangsschneiden und daran angrenzenden Freiflächen ausgebildet. Dennoch soll die bevorzugte Weiterbildung die Möglichkeit zum Ausdruck bringen, dass gegebenenfalls einzelne Schneidelemente bestehen, an denen keine oder nur teilweise Umfangsschneiden und / oder daran angrenzenden Freiflächen ausgebildet sind.

Bevorzugt ist vorgesehen, dass die primären Freiwinkel der primären Freiflächen gleich groß sind und zwischen 1° und 15° liegen, gemessen zur Tangentialen der jeweiligen Umfangsschneide. Weiter bevorzugt liegen die primären Freiwinkel zwischen 4° und 12°, besonders bevorzugt um 8° ± 2°, insbesondere 8° ± 1°.
Die Beträge für den primären Freiwinkel werden bewusst klein gewählt, um an der zugeordneten Umfangsschneide einen großen Spanwinkel und damit eine gute Schichthaftung einer etwaigen Hartstoffschicht zu gewährleisten.

Weiter bevorzugt ist vorgesehen, dass an die primären Freiflächen jeweils eine sekundäre Freifläche anschließt.
Es ist bevorzugt vorgesehen, dass die sekundären Freiflächen jeweils unter sekundären Freiwinkeln verlaufen, welche sekundären Freiwinkel dem Betrage nach größer sind als die primären Freiwinkel.
Damit ist zum Ausdruck gebracht, dass die sekundären Freiflächen bevorzugt "steiler" verlaufen als die primären Freiflächen. Damit werden die primären Freiflächen vorteilhaft freigestellt. Besonders vorteilhaft ist es, wenn die sekundären Freiwinkel dem Betrage nach um wenigstens 20% größer, weiter bevorzugt doppelt so groß, bis höchstens viermal so groß sind als die primären Freiwinkel.
Wenn also die primären Freiwinkel beispielsweise bei 8° liegen, sind für sekundären Freiwinkel Beträge um 16° besonders bevorzugt.

An die sekundären Freiflächen schließen bevorzugt tertiäre Freiflächen an, die unter noch größeren Freiwinkeln, also noch steiler verlaufen. Die Freiwinkel der tertiären Freiflächen betragen insbesondere ≥ 20°, weiter bevorzugt ≥ 25°.

Bevorzugt ist vorgesehen, dass eine Breite der primären Freifläche zwischen einem 0,040-fachen und einem 0,110-fachen des Werkzeugdurchmessers beträgt. In anderen Worten bedeutet diese Weiterbildung, dass die Breite der primären Freifläche bevorzugt zwischen 4% und 11% des Werkzeugdurchmessers beträgt.
Ganz besonders bevorzugt liegt die Breite der primären Freifläche bei rund einem 0,074-fachen des Werkzeugdurchmessers. Von dieser Angabe sind Werte +/- 10% umfasst, also ein Bereich von 0,067 bis 0,081 umfasst.
Diese Weiterbildung bringt zum Ausdruck, dass die primären Freiflächen relativ schmal bemessen sind. Der Vorteil einer schmalen primären Freifläche ist unter anderem, dass die Freifläche leichter freizustellen ist und große Bandbreite von Vorschubgeschwindigkeiten erlaubt.

Die sekundären Freiflächen sind bevorzugt in ähnlicher oder gleicher Breite ausgebildet wie die primären Freiflächen.

Es kann vorgesehen sein, dass die Anzahl der entlang einer Linksspirale verlaufenden ersten Spannuten verschieden ist von der Anzahl der entlang einer Rechtsspirale verlaufenden zweiten Spannuten. Damit kann eine vorteilhafte Teilung des Schneidenabschnitts erzielt werden. Ferner wird eine günstige Schneidenüberlappung entlang eines Flugkreises erreicht. Damit ist gemeint, dass durch die ungleiche Anzahl der Spannuten die Umfangsschneiden entlang des Schneidenabschnitts günstig verteilt sind. Somit sind die Schneiden entlang eines Flugkreises nicht in einer Flucht, sondern versetzt zueinander angeordnet.
Besonders günstige Kombinationen sind beispielsweise vier entlang einer Rechtsspirale verlaufende Spannuten mit fünf oder sechs entlang einer Linksspirale verlaufenden Spannuten,
oder sechs entlang einer Rechtsspirale verlaufende Spannuten mit acht entlang einer Linksspirale verlaufenden Spannuten.
In anderen Worten ist bevorzugt vorgesehen, dass ein Verhältnis der Anzahl von entlang einer Rechtsspirale verlaufenden Spannuten zur Anzahl der entlang einer Linksspirale verlaufenden Spannuten 4 : 5 oder 4 : 6 oder 6 : 8 beträgt. Die absolute Anzahl an Spannuten richtet sich auch nach dem Werkzeugdurchmesser. So wird die Kombination von 4:5 bei eher kleineren Durchmessern gewählt (beispielsweise ∅ ≤ 10mm).

Es kann vorgesehen sein, dass der Spiralwinkel der entlang einer Rechtsspirale verlaufenden zweiten Spannuten einen anderen Betrag aufweist als der Spiralwinkel der entlang einer Linksspirale verlaufenden ersten Spannuten . Insbesondere beträgt der Spiralwinkel der Rechtsspirale zwischen 20° und 50°, insbesondere 30° ± 2°, weiter bevorzugt 30° ± 1°.
Bevorzugt beträgt der Spiralwinkel der Linksspirale zwischen 20° und 50°, insbesondere 35° ± 2°, weiter bevorzugt 35° ± 1°.
Bevorzugt ist der Betrag des Spiralwinkel der Linksspirale größer als der der Rechtsspirale.

Durch die sich kreuzenden ersten Spannuten entlang einer Linksspirale und zweiten Spannuten entlang einer Rechtsspirale ist am Schneidenabschnitt eine Vielzahl von diskreten Schneidelementen ausgebildet. Die Form der Schneidelemente in einer Abwicklung des Schneidenabschnitts kann im Wesentlichen als die eines Parallelogramms angesprochen werden. Dabei weisen zwei Ecken des Parallelogramms im Wesentlichen in Längsrichtung des Fräswerkzeugs, die anderen zwei Ecken quer dazu, also in eine Umfangsrichtung des Fräswerkzeug.
Bevorzugt ist vorgesehen, dass die Form der Deckfläche der Schneidelemente, also die Ansicht in einer Abwicklung des Schneidenabschnitts, die Form eines Parallelogramms mit zwei ungleich langen Seitenpaaren aufweist.

Insbesondere sind die drückend wirkenden Umfangsschneiden länger als die ziehenden Schneiden. Ein Längenverhältnis kann bevorzugt bei 1,1 bis 1,5 liegen, bevorzugt nahe bei 1,1 liegen.

Besonders günstig ist es, wenn ein Innenwinkel des Parallelogramms, welcher Innenwinkel zu in Längsrichtung weisenden Ecken gehört, zwischen 40° und 90° beträgt. Damit ist zum Ausdruck gebracht, dass die Schneidelemente entlang der Längsrichtung des Fräswerkzeugs gestreckt sind.
Komplementär dazu sind Innenwinkel, welche zu in Umfangsrichtung weisenden Ecken gehören, stumpf. So wird vorteilhaft mehr Schneidenlänge in Umfangsrichtung angeboten.
Insbesondere beträgt der Innenwinkel der in Längsrichtung weisenden Ecken um 65° ± 15%, weiter bevorzugt 65° ± 10%, noch weiter bevorzugt 65° ± 5%. Innenwinkel von unter 65° sind tendenziell instabil und empfindlich.

Bevorzugt kann vorgesehen sein, dass an Umfangsschneiden eine Rundschlifffase (auch "Rundfase" genannt) ausgebildet ist. Eine Rundschlifffase bedeutet, dass an die jeweilige Umfangsschneide ein von der Zylindermantelfläche gebildeter Abschnitt angrenzt. In anderen Worten beginnt gemäß dieser Weiterbildung die primäre Freifläche nicht unmittelbar an der Umfangsschneide, sondern mittelbar nach der Rundschlifffase.
Eine Rundschlifffase wirkt sich günstig auf die Laufruhe des Fräswerkzeugs aus. Auch stützt sich das Fräswerkzeug mit einer Rundschlifffase vorteilhaft ab. Auch ist der sogenannte Schneidkeil - also der Querschnitt der Schneide - bei Vorliegen einer Rundschlifffase geometrisch günstiger für die Haftung einer Hartstoffschicht, insbesondere einer Diamantbeschichtung.

Das Fräswerkzeug ist bevorzugt zumindest teilweise beschichtet, insbesondere diamantbeschichtet.

Es kann vorgesehen sein, dass wenigstens eine der entlang einer Rechtsspirale verlaufenden Spannuten tiefer und / oder breiter ausgebildet ist als wenigstens eine der entlang einer Linksspirale verlaufenden Spannuten. Dies bringt zum Ausdruck, dass sich die rechts- und linksweisenden Spannuten hinsichtlich eines Nutprofils, also einer Querschnittsform der Nut, voneinander unterscheiden.
Mit der Maßnahme kann die Teilung des Schneidenabschnitts und die Gestalt der Schneidelemente vorteilhaft beeinflusst werden.

Es kann beispielsweise die Tiefe der als Rechtsspiralen ausgebildeten, also rechtsweisenden Spannuten gleich oder unterschiedlich zu einer Tiefe der linksweisenden Spannuten sein. Mit Tiefe ist gemeint, wie weit radial in Richtung Längsachse die jeweilige Spannut in die zylindrische Grundform des Werkzeugs eingeformt ist. Eine größere Tiefe erlaubt eine deutlichere Ausgestaltung eines Zahnprofils eines Schneidelements. Zudem wird ein Volumen der Spannut vergrößert, was günstig für einen Abtransport von Spänen ist.

Ferner kann beispielsweise vorgesehen sein, dass sich die rechtsweisenden und linksweisenden Spannuten hinsichtlich ihrer Breite unterscheiden. Mit Breite ist die laterale Erstreckung einer Spannut zwischen Schneidelementen gemeint.

Das erfindungsgemäße Fräswerkzeug ist besonders geeignet für ein Besäumen oder ein Fräsen von Taschen. Günstig ist es, dass beim erfindungsgemäßen Fräswerkzeug nicht auf eine spezielle axiale Positionierung gegenüber dem Werkstück geachtet werden muss, da das Fräswerkzeug entlang des gesamten Schneidenabschnitts gleichmäßig arbeitet.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: ein erfindungsgemäßes Fräswerkzeug in einer perspektivischen Ansicht,
- Fig. 2:: ein Detail des Fräswerkzeugs,
- Fig. 3: ein einzelnes Schneidelement,
- Fig. 4a und 4b: schematische Schnitte durch ein Schneidelement,
- Fig. 5: ein Ausschnitt des Fräswerkzeugs mit eingezeichneten Schnittebenen
- Fig. 6a und 6b: Schnitte zu den in Figur 5 eingezeichneten Schnittebenen
- Fig. 7: eine schematische und ausschnittsweise Abwicklung des Schneidenbereichs

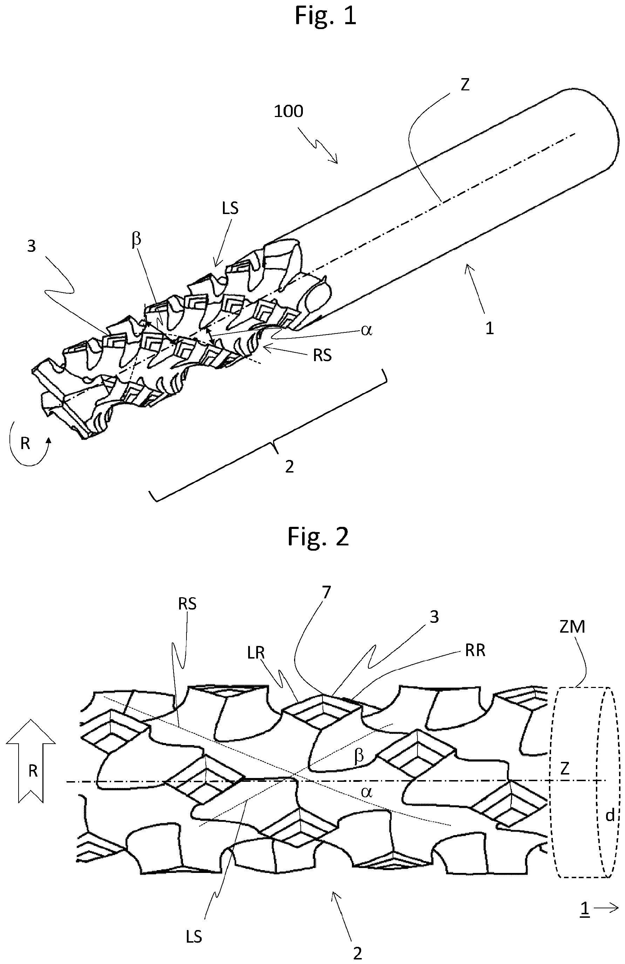

Figur 1 zeigt ein erfindungsgemäßes Fräswerkzeug 100 nach einem Ausführungsbeispiel. Das Fräswerkzeug 100 weist eine zylindrische Grundgestalt auf und umfasst einen zur Einspannung des Fräswerkzeugs dienenden Schaftabschnitt 1 und einen Schneidenabschnitt 2, die sich entlang einer Längsachse Z erstrecken. Das hier diskutierte Fräswerkzeug 100 ist für einen rechtsdrehenden Gebrauch vorgesehen, wie durch den Drehpfeil der Drehrichtung R illustriert. Freilich sind auch für linksdrehenden Gebrauch vorgesehene Fräswerkzeuge von der Erfindung umfasst.

Der Einspannabschnitt 1 ist in dem Ausführungsbeispiel als zylindrisch realisiert. Abweichend davon oder ergänzend dazu sind auch andere Formen wie Abflachungen, Polygone oder Gewinde möglich.
Am Schneidenabschnitt 2 sind mehrere als Linksspiralen ausgebildete erste Spannuten LS und mehrere als Rechtsspiralen ausgebildete zweite Spannuten RS eingeformt, durch welche sich kreuzenden ersten Spannuten LS und zweiten Spannuten RS am Schneidenabschnitt 2 eine Vielzahl von diskreten Schneidelementen 3 entsteht.

Die als Linksspiralen ausgebildeten (linksweisenden) ersten Spannuten LS verlaufen in einem Spiralwinkel β zur Längsachse Z. Der Spiralwinkel β der als Linksspiralen ausgebildeten Spannuten LS weist typischerweise einen Betrag zwischen 20° und 50° auf, weiter bevorzugt einen Betrag zwischen 32° und 38°, insbesondere 35° ± 2°, weiter bevorzugt 35° ± 1°.

Die als Rechtsspiralen ausgebildeten (rechtsweisenden) Spannuten RS verlaufen in einem Spiralwinkel α zur Längsachse Z.
Insbesondere beträgt der Spiralwinkel α der Rechtsspirale zwischen 20° und 50°, insbesondere 30° ± 2°, weiter bevorzugt 30° ± 1°.
Bevorzugt ist der Betrag des Spiralwinkel der Linksspirale größer als der der Rechtsspirale.
Im vorliegenden Ausführungsbeispiel liegen die Spiralwinkel bei vorteilhaften 35° für den Spiralwinkel β der Linksspiralen und vorteilhaften 30° für den Spiralwinkel α der Rechtsspirale.
In dem Ausführungsbeispiel besteht eine vorteilhafte Anzahl von vier Spannuten entlang der Rechtsspirale und eine vorteilhafte Anzahl von fünf Spannuten entlang der Linksspirale.

Der Spiralwinkel wird dabei bestimmt zwischen einer Tangente zur betreffenden Spannut und der Längsachse Z in einer winkeltreuen Ansicht.
Nach Konvention wird der Spiralwinkel (auch: Drallwinkel) von rechtsweisenden Spiralnuten positiv angegeben.

Durch die sich kreuzenden linksweisenden und rechtsweisenden Spannuten wird eine Vielzahl von diskreten Schneidelementen 3 gebildet. Die Schneidelemente 3 haben - geometrisch vereinfacht gesprochen - die Form von Pyramidenstümpfen oder Stollen und weisen eine in einer Draufsicht viereckige Deckfläche auf. Die Form der Deckfläche kann beispielsweise quadratisch sein oder auch die Form eines Parallelogramms aufweisen.

Die Gestalt ergibt sich durch die Spiralwinkel der Spannuten und das jeweilige Nutprofil.
Insbesondere haben die Schneidelemente 3, genauer gesagt deren Deckflächen in einer Draufsicht die Form eines Parallelogramms. Insbesondere ist die Form entlang der Längsachse Z gestreckt.
An den Schneidelementen 3 sind Seitenflanken ausgebildet. Im Querschnitt betrachtet, entspricht die Form der Seitenflanken in der Regel der Form der jeweiligen Spannut. Damit ist gemeint, dass bei Einbringung der jeweiligen Spannut - was typischerweise durch ein Schleifen mit einer Schleifscheibe erfolgt - die dadurch eingebrachte Kontur an den Seitenflanken der Schneidelemente 3 vorliegt. In der Regel weisen die Seitenflanken daher einen gekrümmten Verlauf und einen sanften Übergang zu einem Grund der jeweiligen Spannut auf. Dies ist aus mechanischen Gesichtspunkten günstig.

Für einen rechtsdrehenden Gebrauch, wie es im diskutierten Ausführungsbeispiel gezeigt ist, können die rechtsweisenden Spannuten RS tiefer und / oder breiter ausgestaltet sein als die linksweisenden Spannuten LS. Die rechtsweisenden Spannuten RS und linksweisenden Spannuten LS sind jedoch beide wichtig für die Spanabfuhr.

Es kann vorgesehen sein, dass der der Spiralwinkel α der entlang einer Rechtsspirale verlaufenden zweiten Spannuten RS einen anderen Betrag aufweist als der Spiralwinkel β der entlang einer Linksspirale verlaufenden ersten Spannuten LS.

Das Fräswerkzeug 100 ist insbesondere als Schaftfräser ausgebildet. Der Einspannabschnitt 1 und der Schneidenabschnitt 2 sind dabei einstückig, d.h. monolithisch aus einem harten Material gebildet, das z.B. ein Hartmetall (engl.: *cemented carbide*), ein Cermet oder eine Schneidkeramik sein kann. Insbesondere ist das Fräswerkzeug 100 dabei bevorzugt gänzlich aus Hartmetall gebildet, somit als sogenanntes Vollhartmetallwerkzeug anzusprechen.
Unter Hartmetall wird ein Verbundwerkstoff verstanden, der überwiegend aus Hartstoffpartikeln besteht, welche von einem duktilen metallischen Binder umgeben und gehalten sind. Am gebräuchlichsten ist Hartmetall, bei dem die Hartstoffpartikel zumindest überwiegend aus Wolframkarbid gebildet sind und der metallische Binder eine Kobalt-Basislegierung oder eine Nickel-Basislegierung ist.

Insbesondere ist das Fräswerkzeug 100 beschichtet, vorzugsweise diamantbesch ichtet.

Üblicherweise und bevorzugt ist die Geometrie des Schneidenabschnitts 2 durch Schleifen eines zylindrischen Hartmetallstabes (eines Rohlings) hergestellt.

Figur 2 zeigt einen Ausschnitt des Schneidenbereichs 2 eines erfindungsgemäßen Fräswerkzeugs 100, wobei wieder die vorgesehene Drehrichtung R angezeigt ist.
Ein Schneidelement 3 weist eine entlang einer linksweisenden Spannut LS verlaufende erste Umfangsschneide LR und eine entlang einer rechtsweisenden Spannut RS verlaufende zweite Umfangsschneide RR auf. Bei einem Eingriff in ein Werkstück bei Verwendung in der vorgesehenen Drehrichtung R vollzieht dabei die entlang einer Linksspirale verlaufende erste Umfangsschneide LR einen drückenden Schnitt. "Drückender Schnitt" bedeutet, dass die betreffende Umfangsschneide LR auf ein zu bearbeitendes Werkstück eine axiale Kraftkomponente in Richtung einer Stirn (Spitze) des Fräswerkzeugs 100 ausübt. "Axial" bedeutet in diesem Zusammenhang als parallel zur Längsachse Z weisend.
Eine entlang einer rechtsweisenden Spannut RS verlaufende Umfangsschneide RR hingegen wirkt mit ziehendem Schnitt, das heißt, dass die betreffende Umfangsschneide RS auf ein zu bearbeitendes Werkstück eine axiale Kraftkomponente in Richtung des Einspannabschnitts 1, also in Richtung Schaft des Fräswerkzeugs 100 ausübt.
Indem an einem Schneidelement 3 sowohl eine Umfangsschneide mit ziehendem Schnitt als auch eine Umfangsschneide mit drückendem Schnitt ausgebildet ist, wirkt das Schneidelement 3 bezüglich einer axialen Kraftausübung auf ein Werkstück neutral. Ein Werkstück erfährt dadurch weder Druck- noch Zugbelastung, wodurch eine Delamination wirksam verhindert wird.

Bevorzugt sind sämtliche Schneidelemente 3 im Schneidenbereich 2 derart ausgestaltet. Lediglich in einem Stirnbereich und in einem Auslaufbereich in Richtung Einspannabschnitt 1 sind typischerweise auch abweichend ausgebildete Schneidelemente 3 vorhanden.

Bevorzugt sind die entlang einer Linksspirale verlaufenden ersten Umfangsschneiden LR und die entlang einer Rechtsspirale verlaufenden zweiten Umfangsschneiden RR ungleich lang.

Insgesamt bewirkt die pflugförmige Anordnung der Umfangsschneiden einen besonders sauberen Schnitt. Fasern eines Faserverbundwerkstoffes werden durch die erfindungsgemäße Ausgestaltung sauber abgeschert und durchtrennt. Besonders vorteilhaft ist der geringe Faserüberstand nach der Bearbeitung mit einem erfindungsgemäßen Fräswerkzeug.

Ferner in Figur 2 angedeutet ist eine Zylindermantelfläche ZM, welche einen Außenumfang des Schneidenabschnitts 2 und den Werkzeugdurchmesser - d - bestimmt. Sowohl die erste Umfangsschneide LR als auch die zweite Umfangsschneide RR erstrecken sich entlang der gemeinsamen umhüllenden Zylindermantelfläche ZM. In anderen Worten liegen die Umfangsschneiden LR, RR an einem Außenumfang des Fräswerkzeugs 100.
Indem sich die Umfangsschneiden entlang der gemeinsamen umhüllenden Zylindermantelfläche ZM erstrecken, liegen an den Umfangsschneiden günstigere, sanftere Schnittbedingungen vor als beispielsweise bei gerade verlaufenden Schneiden. Ferner steht dadurch eine große Schneidenlänge zur Verfügung.
Die erste Umfangsschneide LR und die zweite Umfangsschneide RR münden in einer gemeinsamen Spitze 7.
Ebenfalls in Figur 2 dargestellt ist der Verlauf der Spannuten. Die entlang einer Linksspirale verlaufenden ersten Spannuten LS verlaufen mit einem Spiralwinkel β zur Längsachse Z.

Die entlang einer Rechtsspirale verlaufenden zweiten Spannuten RS verlaufen mit einem Spiralwinkel α zur Längsachse Z.
Man erkennt anhand der Konturen der Spannuten des Ausführungsbeispiels in Figur 2, dass die linksweisenden ersten Spannuten LS weniger tief eingeformt sind als die rechtsweisenden Spannuten RS.
Dies kann bei einem rechtsdrehenden Betrieb entsprechend dem Ausführungsbeispiel sein. Es steht so mehr Spanraum zur Verfügung, welcher spanabführend in Richtung Schaftabschnitt 1 wirkt.

Vorzugsweise sind die linksweisenden und die rechtsweisenden Spannuten gleich tief, denn eine zu flache Spannut stellt eine Limitierung hinsichtlich Spanabfuhr dar.

Die Beträge der Spiralwinkel der linksweisenden ersten Spannuten LS und der rechtsweisenden zweiten Spannuten RS können gleich oder unterschiedlich sein. Vorzugsweise sind die Spiralwinkel unterschiedlich.

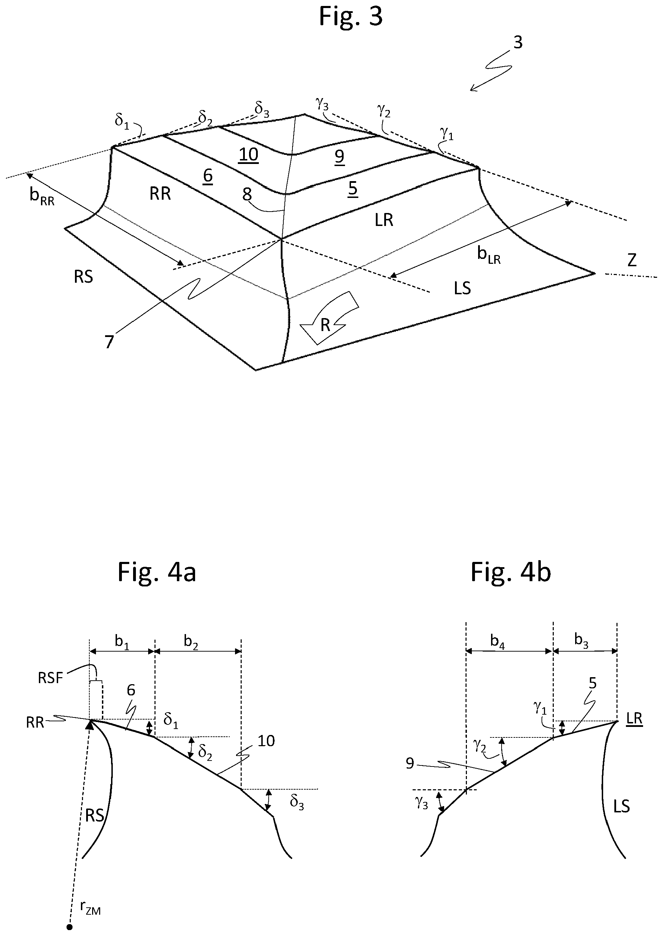

Figur 3 zeigt schematisch ein einzelnes Schneidelement 3 im Detail. Die Betrachtungsrichtung ist entgegen der Drehrichtung R. Die erste Umfangsschneide LR und die zweite Umfangsschneide RR münden in einer gemeinsamen Spitze 7.

An der ersten Umfangsschneide LR ist eine erste primäre Freifläche 5 ausgebildet, an der zweiten Umfangsschneide ist eine zweite primäre Freifläche 6 ausgebildet, wobei die erste primäre Freifläche 5 und die zweite primäre Freifläche 6 entlang einer ersten Freiflächenkante 8 aneinandergrenzen. Die erste primäre Freifläche 5 verläuft mit einem ersten primären Freiwinkel γ₁.
Die zweite primäre Freifläche 6, die der zweiten Umfangsschneide RR zugeordnet ist, verläuft mit einem zweiten primären Freiwinkel δ₁.
Bevorzugt sind die primären Freiwinkel γ₁, δ₁ gleich groß.

Wie in dem Ausführungsbeispiel dargestellt, ist es bevorzugt vorgesehen, dass an die primären Freiflächen weitere, sekundäre Freiflächen anschließen. So ist bevorzugt vorgesehen, dass an die erste primäre Freifläche 5 eine erste sekundäre Freifläche 9 angrenzt, welche sekundäre Freifläche 9 in einem ersten sekundären Freiwinkel γ₂ verläuft.
An die zweite primäre Freifläche 6 schließt die zweite sekundäre Freifläche 10, welche in einem zweiten sekundären Freiwinkel δ₂ verläuft.
Die Beträge der sekundären Freiwinkel γ₂, δ₂ sind dabei bevorzugt größer als die der primären Freiwinkel γ₁, δ₁, um die sekundären Freiflächen weiter freizustellen.

Das Schneidelement 3 weist entlang der ersten Umfangsschneide LR eine Breite b_{LR} auf, was der Länge der ersten Umfangsschneide LR entspricht.
Das Schneidelement 3 weist entlang der zweiten Umfangsschneide RR eine Breite b_{RR} auf, was der Länge der zweiten Umfangsschneide RR entspricht.
Bevorzugt sind die erste Umfangsschneide LR und die zweite Umfangsschneide RR ungleich lang.
Insbesondere ist die Breite b_{LR} der Umfangsschneide LR größer als die Breite b_{RR} der Umfangsschneide RR.

Die Verhältnisse gehen noch deutlicher aus den Figuren 4a und 4b hervor, welche schematische Querschnitte durch ein Schneidelement 3 zeigen. Die Schnitte sind dabei so gelegt, dass eine Schnittebene normal zur Längsachse Z verläuft. Die Winkelbeträge sind dabei überzeichnet dargestellt.

Optional ist an der ersten Umfangsschneide LR und / oder an der zweiten Umfangsschneide RR eine Rundschlifffase RSF ausgebildet. Dies ist exemplarisch in Figur 4a dargestellt.
Rundschlifffase bedeutet, dass die an die jeweilige Umfangsschneide angrenzende Fase zumindest abschnittsweise entlang des Werkzeugdurchmessers d, das heißt am umhüllenden Zylindermantel ZM des Werkzeugs verläuft, wie durch einen Radius r_{ZM} des Zylindermantels ZM angezeigt. Eine Rundschlifffase RSF ist, wie bereits erläutert, günstig für Laufruhe und einen robusten Schneidkeil sowie für eine etwaige Beschichtung. Eine Breite der Rundschlifffase RSF beträgt insbesondere zwischen 0,01 mm und 0,20 mm, weiter bevorzugt zwischen 0,05 mm und 0,15 mm.

In der Regel liegen die Beträge der primären Freiwinkel γ₁, δ₁ zwischen 4° und 12°, besonders bevorzugt um 8° ± 2°, insbesondere 8° ± 1°.

Die Beträge der sekundären Freiwinkel γ₂, δ₂ werden größer gewählt, sie liegen typischerweise zwischen 10° und 30°, bevorzugt um 16° ± 2°, weiter bevorzugt um 16° ± 1°.

Ferner weisen die primären Freiflächen 5, 6 und die sekundären Freiflächen 9, 10 jeweils eine Breite auf, welche Breite b₁ der primären Freifläche 6 und welche Breite b₂ der sekundären Freifläche 10 in Figur 4a dargestellt sind.
In Figur 4b sind entsprechend die Breiten b₃ und b₄ der primären Freifläche 5 bzw. der sekundären Freifläche 9 gezeigt.
In der Regel sind die Breiten der primären Freiflächen 5, 6 jeweils gleich groß, und auch die die Breiten der sekundären Freiflächen 9, 10 sind jeweils gleich groß.
Die Breiten b₁, b₃ der primären Freiflächen sind bevorzugt relativ schmal bemessen. Bevorzugt ist vorgesehen, dass eine Breite b₁, b₃ der primären Freifläche zwischen einem 0,040-fachen und einem 0,110-fachen des Werkzeugdurchmessers d beträgt. In anderen Worten bedeutet diese Weiterbildung, dass die Breite einer primären Freifläche b₁, b₃ bevorzugt zwischen 4% und 11 % des Werkzeugdurchmessers d beträgt.
Ganz besonders bevorzugt liegt die Breite der primären Freiflächen b₁, b₃ bei rund einem 0,074-fachen vom Werkzeugdurchmesser d. Von dieser Angabe sind Werte ± 10% umfasst, also ein Bereich von 0,067 bis 0,081 umfasst.

An die sekundären Freiflächen 9, 10 schließen bevorzugt dritte Freiflächen an, die unter tertiären Freiwinkeln γ₃, δ₃ verlaufen. Die tertiären Freiwinkel γ₃, δ₃ sind bevorzugt deutlich größer als die sekundären Freiwinkel. Freiwinkel der tertiären Freiflächen betragen insbesondere ≥ 20°, weiter bevorzugt ≥ 25°. Die tertiären Freiflächen liegen also rückenseitig am Schneidelement 3 und grenzen schließlich an die Spannuten an.

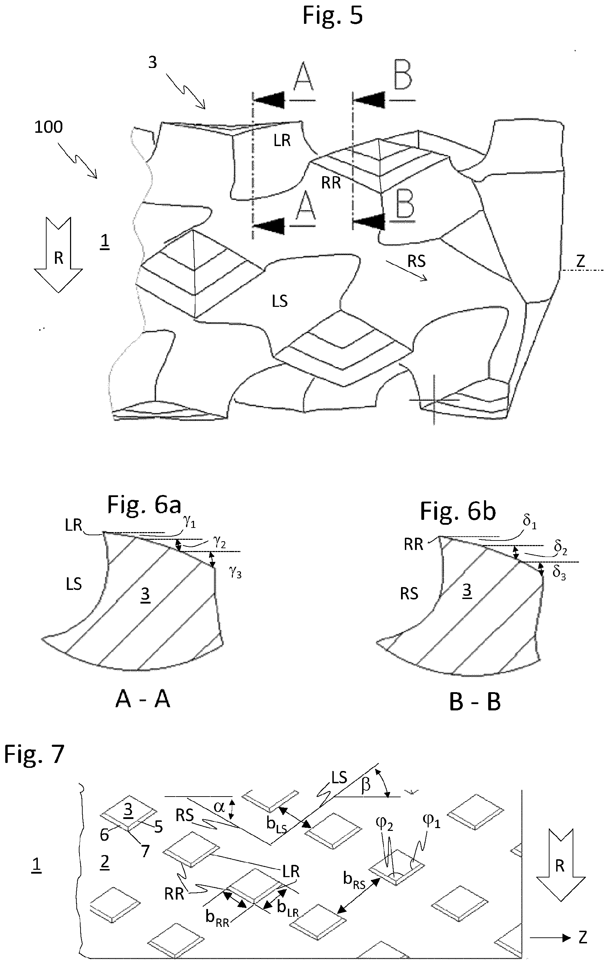

Figur 5 zeigt einen Ausschnitt des Schneidenabschnitts eines erfindungsgemäßen Fräswerkzeugs 100. Eingetragen sind die Schnittebenen A-A und B-B, welche Schnitte durch Schneidelemente 3 markieren. Die Schnitte erfolgen jeweils in Ebenen mit der Längsrichtung Z als Normalenvektor, in anderen Worten, als würde man das Fräswerkzeug 100 normal zur Längsrichtung trennen.
Der Ausschnitt ist so orientiert, dass ein Drehsinn in Drehrichtung R in der Darstellung nach unten weist. Ein Einspannabschnitt 1, also der Schaft, ist in der Darstellung links angedeutet. Das Fräswerkzeug 100 ist also rechtsdrehend dargestellt.

Figuren 6a und 6b zeigen die Schnitte A-A und B-B durch Schneidelemente 3 gemäß Figur 5.
Figur 6a zeigt den Schnitt A-A. Angedeutet ist der primäre Freiwinkel γ₁, der sekundäre Freiwinkel γ₂ und der tertiäre Freiwinkel γ₃ mit den dazugehörigen Freiflächen, welche an die Umfangsschneide LR anschließen, die an der Spannut LS mit Linksspirale verläuft.
Figur 6 b zeigt den Schnitt B - B. Gezeigt sind analog die primären, sekundären und tertiären Freiwinkel δ₁, δ₂. δ₃, verlaufen bzw. Freiflächen, welche an die Umfangsschneide RR anschließen, die an der Spannut RS mit Rechtsspirale verläuft.

Figur 7 zeigt schematisch einen Ausschnitt einer Abwicklung des Schneidenbereichs 2 eines erfindungsgemäßen Fräswerkzeugs 100, wobei wieder die vorgesehene Drehrichtung R angezeigt ist. In der Abwicklung ist die Grundgestalt der Schneidelemente 3 , genauer gesagt deren Deckflächen, ersichtlich. Die Kontur der Schneidelemente 3 ist von den ersten und zweiten Umfangsschneiden RR, LR sowie - jeweils gegenüberliegend - vom Übergang der rückenseitigen Freiflächen in die jeweilige Spannut gebildet.
Der Übersichtlichkeit halber sind an einem Schneidelement 3 nur die primären Freiflächen 5, 6 eingezeichnet. Auch sind nicht an jedem Schneidelement 3 sämtliche Bezugszeichen vergeben.

Die Spannut RS verläuft in einer Rechtsspirale mit einem Spiralwinkel α.
Die Spannut LS verläuft in einer Linksspirale mit einem Spiralwinkel β.

In dem gezeigten Ausführungsbeispiel beträgt der Spiralwinkel α der rechtsweisenden Spannut RS bevorzugte 30°, der Spiralwinkel β der linksweisenden Spannut LS bevorzugte 35°.
Eine Breite b_{LS} der linksweisenden Spannut LS ist geringer als eine Breite b_{RS} der rechtsweisenden Spannut RS . Insbesondere beträgt das Verhältnis der Breiten der Spannuten (b_{RS} / b_{LS}) 1,2 bis 3,0.
Als die jeweiligen Breiten der Spannuten werden die Abstände zwischen den betreffenden Umfangsschneiden und dem gegenüberliegenden Übergang der Freifläche zur Spannut betrachtet.

Ein in Längsrichtung Z des Fräswerkzeugs 100 weisender erster Innenwinkel ϕ₁ eines Schneidelements 3 ist bevorzugt kleiner als ein in Umfangsrichtung weisender zweiter Innenwinkel ϕ₂ eines Schneidelements 3.
Insbesondere beträgt der erste Innenwinkel ϕ₁ um 65° ± 15%, weiter bevorzugt 65° ± 10%, noch weiter bevorzugt 65° ± 5%.
Innenwinkel der in Längsrichtung weisenden Ecken von unter 65° sind tendenziell instabil und empfindlich.
Komplementär dazu sind die zweiten Innenwinkel ϕ₂, welche zu in Umfangsrichtung weisenden Ecken gehören, stumpf. Der zweiten Innenwinkel ϕ₂, wird ersichtlich von den daran anliegenden Umfangsschneiden LR und RR aufgespannt. So wird vorteilhaft mehr Schneidenlänge in Umfangsrichtung angeboten.
In einer Variante sind die erste Umfangsschneide LR und die zweite Umfangsschneide RR ungleich lang. Insbesondere ist die Breite b_{LR} der Umfangsschneide LR größer als die Breite b_{RR} der Umfangsschneide RR. Insbesondere beträgt ein Längenverhältnis von (b_{LR}/b_{RR}) zwischen 1,0 und 2,0, bevorzugt zwischen 1,1 und 1,5, besonders bevorzugt um 1,1 ± 0,1. Dies kann vorteilhaft sein für ein moderates Überwiegen einer drückenden Wirkung.

## Patentansprüche

1. Fräswerkzeug (100) für die Bearbeitung von Faserverbundwerkstoffen umfassend
einen Einspannabschnitt (1) und einen Schneidenabschnitt (2), die sich entlang einer Längsachse (Z) erstrecken,
wobei der Schneidenabschnitt (2) eine zylindrische Grundform aufweist, wobei am Schneidenabschnitt (2) eine Mehrzahl von als Linksspiralen ausgebildeten ersten Spannuten (LS) und eine Mehrzahl von als Rechtsspiralen ausgebildeten zweiten Spannuten (RS) ausgebildet sind, durch welche sich kreuzenden ersten Spannuten (LS) und zweiten Spannuten (RS) am Schneidenabschnitt (2) eine Vielzahl von diskreten Schneidelementen (3) ausgebildet ist,
wobei Schneidelemente (3) eine entlang einer Linksspirale verlaufende erste Umfangsschneide (LR) und eine entlang einer Rechtsspirale verlaufende zweite Umfangsschneide (RR) aufweisen, welche sich jeweils entlang einer gemeinsamen umhüllenden Zylindermantelfläche (ZM) erstrecken, welche Zylindermantelfläche (ZM) einen Außenumfang des Schneidenabschnitts (2) bestimmt, und welche erste Umfangsschneide (LR) und zweite Umfangsschneide (RR) in einer gemeinsamen Spitze (7) münden,
wobei zumindest an einer Teilmenge der Vielzahl von Schneidelementen (3) an die erste Umfangsschneide (LR) in Umfangsrichtung eine erste, unter einem ersten primären Freiwinkel (γ₁) verlaufende primäre Freifläche (5) und an die zweite Umfangsschneide (RR) in Umfangsrichtung eine zweite, unter einem zweiten primären Freiwinkel (δ₁) verlaufende primäre Freifläche (6) anschließt, wobei die erste primäre Freifläche (5) und die zweite primäre Freifläche (6) entlang einer ersten Freiflächenkante (8) aneinandergrenzen.

2. Fräswerkzeug (100) nach Anspruch 1, wobei die Teilmenge der Vielzahl von Schneidelementen (3) wenigstens 80% der Schneidelemente (3) ausmacht.

3. Fräswerkzeug (100) nach Anspruch 1 oder 2, wobei die primären Freiwinkel (γ₁, δ₁) der primären Freiflächen (5, 6) gleich groß sind und zwischen 4 ° und 12 ° liegen.

4. Fräswerkzeug (100) nach einem der vorangegangenen Ansprüche, wobei an die primären Freiflächen (5, 6) jeweils eine sekundäre Freifläche (9, 10) anschließt.

5. Fräswerkzeug (100) nach Anspruch 4, wobei die sekundären Freiflächen (9, 10) jeweils unter sekundären Freiwinkeln (γ₂, δ₂) verlaufen, welche sekundären Freiwinkel (γ₂, δ₂) dem Betrage nach größer sind als die primären Freiwinkel (γ₁, δ₁).

6. Fräswerkzeug (100) nach einem der vorangegangenen Ansprüche, wobei eine Breite (b₁) der primären Freifläche (5, 6) zwischen einem 0,040-fachen und einem 0,110-fachen des Werkzeugdurchmessers (d) beträgt.

7. Fräswerkzeug (100) nach einem der vorangegangenen Ansprüche, wobei die Anzahl der entlang einer Linksspirale verlaufenden ersten Spannuten (LS) verschieden ist von der Anzahl der entlang einer Rechtsspirale verlaufenden zweiten Spannuten (RS).

8. Fräswerkzeug (100) nach einem der vorangegangenen Ansprüche, wobei der Spiralwinkel (α) der entlang einer Rechtsspirale verlaufenden zweiten Spannuten (RS) einen anderen Betrag aufweist als der Spiralwinkel (β) der entlang einer Linksspirale verlaufenden ersten Spannuten (LS).

9. Fräswerkzeug (100) nach einem der vorangegangenen Ansprüche, wobei wenigstens eine der entlang einer Rechtsspirale verlaufenden Spannuten (RS) tiefer und / oder breiter ausgebildet ist als wenigstens eine der entlang einer Linksspirale verlaufenden Spannuten (LS).

10. Fräswerkzeug (100) nach einem der vorangegangenen Ansprüche, wobei ein Verhältnis der Anzahl von entlang einer Rechtsspirale verlaufenden Spannuten (RS) zur Anzahl der entlang einer Linksspirale verlaufenden Spannuten (LS) 4: 5 oder 4 : 6 oder 6 : 8 beträgt.

11. Fräswerkzeug (100) nach einem der vorangegangenen Ansprüche, wobei eine Breite b_{LR} einer ersten Umfangsschneide LR größer als eine Breite b_{RR} einer zweiten Umfangsschneide RR und ein Längenverhältnis von (b_{LR} / b_{RR}) zwischen 1,1 und 1,5 beträgt.

12. Fräswerkzeug (100) nach einem der vorangegangenen Ansprüche, wobei ein in Längsachse (Z) weisender erster Innenwinkel (ϕ₁) eines Schneidelements (3) definierbar ist, welcher kleiner ist als ein in Umfangsrichtung weisender zweiter Innenwinkel (ϕ₂) des Schneidelements (3).

13. Fräswerkzeug (100) nach einem der vorangegangenen Ansprüche, wobei der Schneidenabschnitt (2) zumindest teilweise hartstoffbeschichtet ist.

14. Fräswerkzeug (100) nach einem der vorangegangenen Ansprüche, wobei eine Breite (b_{LS}) einer linksweisenden Spannut (LS) geringer ist als eine Breite (b_{RS}) einer rechtsweisenden Spannut (RS) und ein Verhältnis der Breiten der Spannuten (b_{RS} / b_{LS}) 1,2 bis 3,0 beträgt.
